(19) Europäisches Patentamt
European Patent Office
Office européen des brevets

(11) Veröffentlichungsnummer: **0 206 281 B1**

(12) **EUROPÄISCHE PATENTSCHRIFT**

(45) Veröffentlichungstag der Patentschrift: **06.05.92**

(51) Int. Cl.$^5$: **C09B 67/10**, //C09B57/04

(21) Anmeldenummer: **86108429.1**

(22) Anmeldetag: **20.06.86**

# (54) Verfahren zum überführen von rohen Isoindolinpigmenten in eine Pigmentform.

(30) Priorität: **25.06.85 DE 3522680**

(43) Veröffentlichungstag der Anmeldung:
**30.12.86 Patentblatt 86/52**

(45) Bekanntmachung des Hinweises auf die Patenterteilung:
**06.05.92 Patentblatt 92/19**

(84) Benannte Vertragsstaaten:
**CH DE GB LI**

(56) Entgegenhaltungen:
**EP-A- 0 132 818**
**FR-A- 2 414 066**

(73) Patentinhaber: **BASF Aktiengesellschaft**
**Carl-Bosch-Strasse 38**
**W-6700 Ludwigshafen(DE)**

(72) Erfinder: **Lotsch, Wolfgang, Dr.**
**Stettiner Strasse 32**
**W-6711 Beindersheim(DE)**

EP 0 206 281 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Isoindolinfarbstoffe der allgemeinen Formeln (I), (II), (III), (IV) und (V)

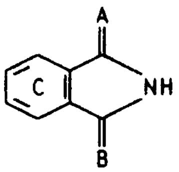 (I), 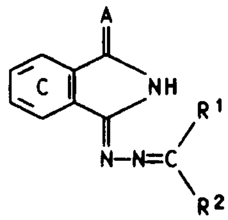 (II), 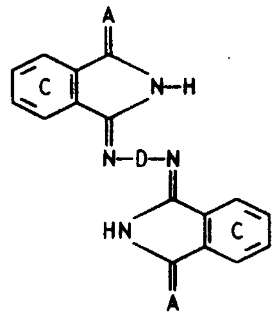

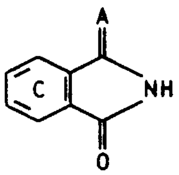 (III) 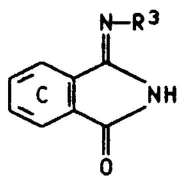 (IV) und

(V)

und Metallkomplexe von (II), (III) und (IV) sind bekannt. In den Formeln bedeuten A und B unabhängig voneinander Reste von methylenaktiven Verbindungen,

- D einen gegebenenfalls substituierten Phenylen- oder Naphthylenrest oder eine direkte Bindung
- $R^1$ Wasserstoff, Hydroxy oder $C_1$- bis $C_4$-Alkyl,
- $R^2$ Phenyl, Naphthyl oder einen 5- oder 6-gliedrigen heteroaromatischen Rest mit einer zur Salzbildung fähigen orthoständigen Hydroxygruppe oder

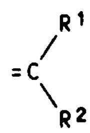

einen Isoindolonrest,

- $R^3$ einen Benzimidazolyl-2- oder einen Benzthiazolyl-2-rest, und wobei Ringe C gegebenenfalls noch weiter substituiert sind.

Die Verbindungen (I) bis (V) sind z.B. aus den DE-OS 16 70 748,20 41 999, 28 14 526, 27 57 982, 30 07 301, 25 04 321, 25 46 038, 23 59 791, 32 29 733, 33 27 564, 32 08 218, und 21 42 245 und den EP-A 35 672 und 62 614 bekannt, und sind oftmals lichtechte Pigmente mit attraktiven Farbtönen. Sie können zum Pigmentieren hochwertiger Lacke angewendet werden. Die gelbe, orange und rote Färbungen liefernden Vertreter eignen sich ganz besonders als Ersatz von Bleichromat- und Bleimolybdatpigmenten.

Die Metallkomplexe von (II), (III) und (IV) enthalten als Zentralatome Nickel, Cobalt oder Zink, von denen Nickel und Cobalt bevorzugt sind.

Die Isoindolinfarbstoffe (I) bis (V) werden durch Kondensation von Diiminoisoindolin- bzw. Iminoisoindolinon mit den entsprechenden CH- bzw. NH-aciden Verbindungen in Lösungsmitteln bei erhöhter Temperatur erhalten und fallen wie die in literaturbekannter Weise hergestellten Metallkomplexe der Verbindungen der Formeln (II), (III) und (IV) in der Regel in sehr grobteiliger Form an. Dies hat zur Folge, daß damit pigmentierte Lacke geringe Farbstärke, mäßiges Deckvermögen und vor allem geringen Glanz aufweisen.

Darüber hinaus verursacht ein unter praxisüblichen Reaktionsbedingungen ebenfalls nicht zu vermeidender Anteil an nicht weiter umgesetzten Monokondensaten und an Hydrolyseprodukten, die im Rohpigment eingeschlossen sind, einen Abfall der Migrationsechtheiten.

Durch Ausrühren mit Lösungsmitteln gelingt es zwar, die Verunreinigungen mehr oder minder gut aus den Rohpigmenten herauszulösen. Dies erfolgt in der Regel auf Kosten von Farbstärke und Glanz, da bei dieser Behandlung weiteres Wachstum der Teilchen erfolgt. Umlösen aus konzentrierter Schwefelsäure, was bei vielen Pigmenten möglich ist, oder Reinigungsoperationen über eine Salzbildung, wie sie z.B. für Isoindolinonpigmente in der DE-AS 19 14 271 beschrieben sind, verschlechtern die coloristischen Eigenschaften wegen Bildung neuer Verunreinigungen durch chemischen Abbau.

Aufgabe der vorliegenden Erfindung war es, ein Verfahren bereitzustellen, nach welchem die - wegen ihrer hohen Echtheitseigenschaften für Pigmentzwecke interessanten - Isoindolinfarbstoffe ohne Verlust der anderen wertvollen Eigenschaften in eine farbstarke und deckende Pigmentform überführt werden können.

Es wurde gefunden, daß man Isoindolinfarbstoffe der Formeln

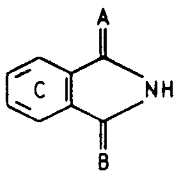 (I), 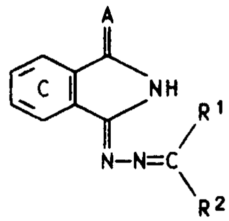 (II), 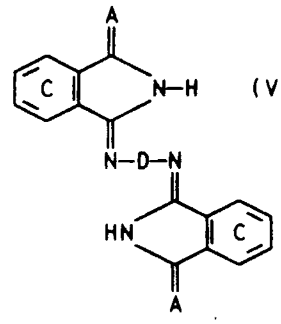 (V)

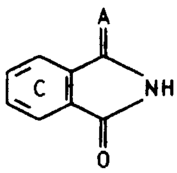 (III) oder 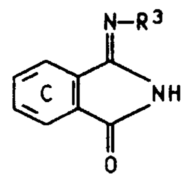 (IV),

(V)

in denen

A und B unabhängig voneinander für jeweils einen Rest einer methylenaktiven Verbindung,

D für einen gegebenenfalls substituierten Phenylen- oder Naphthylenrest oder eine direkte Bindung,

$R^1$ für Wasserstoff, Hydroxy oder $C_1$- bis $C_4$-Alkyl,

$R^2$ für Phenyl, Naphthyl oder einen 5- oder 6-gliedrigen heteroaromatischen Rest, wobei die für $R^2$ genannten Reste eine zur Salzbildung befähigte orthoständige Hydroxygruppe tragen oder

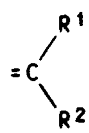

für einen Isoindolonrest,

$R^3$ für Benzimidazolyl-2- oder Benzthiazolyl-2 stehen und wobei die Ringe C gegebenenfalls noch weiter substituiert sind,

und Metallkomplexe der Verbindungen der Formeln (II), (III) und (IV) durch Behandlung mit organischen Flüssigkeiten in der Wärme in deckende Pigmentformen überführen kann, wenn man die Rohpigmente, die Teilchengrößen <0,5 µm aufweisen, in Estern der Benzoesäure, der Benzoldicarbonsäuren oder Gemischen davon auf Temperaturen von Raumtemperatur bis 250 ° C erwärmt.

Nach dem erfindungsgemäßen Verfahren erhält man farbstarke und deckende Pigmentformen von (I), (II), (III), (IV) und (V) und den Metallkomplexen von (II), (III) und (IV), die gleichzeitig verbesserte Echtheiten wie verbesserte Wetter- und Lichtechtheit und verbesserter Reinheit im Farbton aufweisen.

Die Verfahrensprodukte zeichnen sich durch sehr weiches Korn aus und sind dementsprechend leicht dispergierbar. Die neuen Pigmentformen eignen sich hervorragend zum Pigmentieren von Lacken und Kunststoffen.

Das Verfahren gemäß der Erfindung wird im allgemeinen so durchgeführt, daß man das feinteilige Rohpigment, das aus Primärteilchen von <0,5 µm, vorzugsweise von ≦ 0,1 µm besteht, in Estern der Benzoesäure, der Benzoldicarbonsäure oder Gemischen dieser Ester so lange erwärmt, bis das Pigment die gewünschte Teilchengröße aufweist. Das fertige Pigment wird dann in an sich bekannter Weise von der Flüssigkeit abgetrennt und isoliert.

Als Isoindolinfarbstoffe kommen für das erfindungsgemäße Verfahren solche der Formeln (I), (II), (III) und (IV), (V) in Betracht - sowie die Metallkomplexe der Verbindungen der Formeln (II), (III) und (IV) -. Die Reste A und B leiten sich von methylenaktiven Verbindungen der allgemeinen Formeln $AH_2$ bzw. $BH_2$ ab. Für $AH_2$ und $BH_2$ kommen z.B. in Betracht:

a) Cyanmethylverbindungen der allgemeinen Formeln (VI)

$NC\text{-}CH_2\text{-}Y$ (VI),

in der Y für -CN, $-COOR^4$, $-CONHR^5$, Phenyl, Oxazolyl-2 oder Thiazolyl, Chinazolon-4-yl-2, Chinoxalinonyl-2 oder Benzimidazolyl-2 und worin

$R^4$ $C_1$- bis $C_4$-Alkyl,

$R^5$ Wasserstoff, Methyl, Ethyl oder gegebenenfalls durch Methyl, Ethyl, Chlor, Brom, Fluor, Methoxy, Ethoxy, Trifluormethyl, Carbomethoxy, Nitro, Acetylamino substituiertes Phenyl oder

$-NH-R^5$ 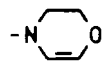

bedeuten,

b) heterocyclische Ketomethylenverbindungen der allgemeinen Formel

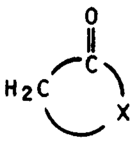 (VII),

in der X für die Ergänzung zu einem 5- oder 6-gliedrigen heterocyclischen Ring steht, der gegebenenfalls mit einem Benzolring kondensiert ist.

Im einzelnen sind für $AH_2$ bzw. $BH_2$ z.B. zu nennen:

$a_1$) Malonsäuredinitril, Cyanessigsäuremethyl-, -ethyl-, -propyl- oder -butylester, Cyanacetamid, Cyanessigsäuremethyl- oder ethlamid, Cyanessigsäuremorpholid, Phenylacetonitril, 2-Cyanmethyloxazol, 2-Cyanmethylthiazol, 2-Cyanmethylchinazolon-4, 2-Cyanmethylchinoxalinon, 2-Cyanmethylbenzimidazol, Cyanacetanilid, 4-Chlorcyanacetamid, 3-Methylcyanacetanilid und 3,4-Dichlorcyanacetanilid;

$b_1$) 4-Methyl-2,6-dioxo-tetrahydropyridin, 1,3-Dioxotetrahydroisochinolin, 2,4-Dihydroxychinolin, 4-Hydroxycumarin, Barbitursäure, N-Methylbarbitursäure, N-Phenylbarbitursäure, 2-Iminobarbitursäure, 1,3-Dimethylbarbitursäure, 3-Methylpyrazolon-5, 3-Phenyl-pyrazolon-5, 1-Phenyl-3-methylpyrazolon-5, 2-Methyloxazolon-5 und Imidazolin-2,4-dion.

Für $AH_2$ bzw. $BH_2$ sind Barbitursäure, Cyanacetamid, 2-Cyanmethylbenzimidazol und Cyanmethylchinazolon-4, sowie deren Derivate bevorzugt.

Für $R^2$ kommen als 5- und 6-gliedrige heteroaromatische Reste z.B. solche in Betracht die sich vom Pyrazol, Pyridin, Pyrimidin, Chinoxalin oder Chinolin ableiten und die eine orthoständige zur Salzbildung befähigte Hydroxygruppe tragen. Für $R^2$ ist 2,4-Dihydroxy-chinolinyl-3 bevorzugt.

Die Metallkomplexe von (II), (III) und (IV) enthalten als Zentralatome Nickel, Kobalt, Kupfer oder Zink, vorzugsweise Kobalt oder Nickel.

Die für das erfindungsgemäße Verfahren benötigten feinteiligen Rohpigmente werden in einigen Fällen direkt bei der Synthese erhalten. In den meisten Fällen ist es jedoch erforderlich die bei der Synthese erhaltenen Rohpigmente durch Mahlen, vorzugsweise durch trockenes Mahlen auf die erforderliche Teilchengröße zu zerkleinern, da die Syntheseprodukte in der Regel in sehr grobteiliger Form anfallen.

Das Mahlen kann in Gegenwart, vorzugsweise in Abwesenheit von Mahlhilfsmitteln erfolgen. Als Mahlhilfsmittel kommen z.B. wasserlösliche Salze wie Steinsalz, Natriumsulfat oder Calciumchlorid in Betracht.

Die Zerkleinerung kann in Planetenkugelmühlen, Schwingmühlen, Kugelmühlen oder Rührwerkskugelmühlen, vorzugsweise in Kugelmühlen mit Keramikkugeln, erfolgen. Je nach der Mühle, den Mahlkörpern und der Füllung des Mahlgerätes dauert der Mahlvorgang 2 bis 70 Stunden, bis das Mahlgut eine Primärteilchengröße von $< 0,5$ µm, vorzugsweise von $\leqq 0,1$ µm aufweist.

Das Mahlgut besteht aus 2 bis 200 µm großen Agglomeraten, die aus den kleinen Primärteilchen aufgebaut sind.

Die feinteiligen Rohpigmente (Mahlgut) werden dann in den Benzolmono-und/oder -dicarbonsäureester gegeben und erwärmt. Dabei tritt Rekristallisation der Teilchen unter Zerfall der Agglomerate ein. Durch geeignete Wahl des Esters, der Temperatur und der Behandlungsdauer kann die Teilchengröße und damit die Eigenschaften der Pigmente z.B. hinsichtlich Deckvermögen, Farbstärke, Dispergierbarkeit gesteuert

werden. Auch die Migrationsechtheit, die Licht- und Wetterechtheit und der Glanz der mit den Pigmenten erhaltenen Färbungen können im Vergleich zu Färbungen mit den entsprechenden Pigmenten des Standes der Technik signifikant verbessert werden.

Als Benzolmono- und -dicarbonsäureester kommen z.B. $C_1$- bis $C_8$-Alkylester der Benzoesäure, der Tolylsäuren, der Phthalsäure, Isophthalsäure, Terephthalsäure und Salicylsäure in Betracht. Bevorzugt sind die $C_1$-$C_4$-Alkylester der Benzoesäure, der 2-, 3- und 4-Tolylsäure und der Phthalsäure, insbesondere die Methylester dieser Säuren. Ganz besonders bevorzugt ist der Benzoesäuremethylester.

Die Temperaturbehandlung kann auch in Gemischen der vorgenannten Ester durchgeführt werden. Im Falle der hochsiedenden Phthalsäureester können die erfindgungsgemäßen Verbesserungen auch erzielt werden, wenn ein Teil dieser Ester durch o-Xylol ersetzt wird. Der Anteil an o-Xylol sollte 80 Gew.%, bezogen auf die organische Phase aus dem Ester und o-Xylol, nicht übersteigen.

Die Rekristallisation (Behandlung) des Mahlgutes in der organischen Flüssigkeit erfolgt im allgemeinen bei Temperaturen im Bereich von Raumtemperatur bis 250 °C, vorzugsweise bei 40 bis 200 °C, je nachdem, ob ein farbstarkes und deckendes oder ein weniger farbstarkes und besonders deckendes Pigment gewünscht wird. Um ein farbstarkes und deckendes Pigment zu erhalten, führt man die Behandlung vorzugsweise bei Temperaturen zwischen Raumtemperatur und 80 °C durch. Zur Herstellung besonders deckender Pigmente wird das Mahlgut in der organischen Flüssigkeit vorzugsweise auf Temperaturen zwischen 130 und 200 °C erwärmt.

Die Menge der organischen Flüssigkeit ist im allgemeinen nicht kritisch und kann deshalb innerhalb weiter Grenzen variieren. Die Mindestmenge an organischer Flüssigkeit ist dadurch bestimmt, daß die Mischung vor, während und nach der Rekristallisation rührbar bzw. knetbar ist und aus der Behandlungsapparatur entleert werden kann.

Die Konzentration an dem feinteiligen Rohpigment (Mahlgut) wird man in der Regel so hoch wie möglich wählen, um bei der Rekristallisation eine möglichst hohe Raum-Zeit-Ausbeute zu erzielen.

Im allgemeinen wird man das 0,3- bis 20-fache, vorzugsweise das 0,5- bis 10-fache der Gewichtsmenge des Mahlgutes an organischer Flüssigkeit anwenden.

Die Rekristallisation in der organischen Flüssigkeit kann unter Durchmischen oder auch durch einfaches Verweilenlassen des Mahlgutes in der organischen Flüssigkeit erfolgen.

Die Dauer der Kristallisation ist von der Temperatur, der organischen Flüssigkeit und von der chemischen Konstitution des Pigmentes abhängig. In der Regel ist die Umwandlung nach einer bis 50 Stunden beendet.

Die Pigmente werden aus dem Behandlungsgemisch in an sich bekannter Weise durch Filtrieren isoliert. Zur Entfernung der Ester wäscht man mit einer geeigneten Flüssigkeit, z.B. Methanol nach.

Die folgenden Beispiele sollen das Verfahren gemäß der Erfindung weiter erläutern. Die im folgenden genannten Teile und Prozentangaben beziehen sich auf das Gewicht. Die Raumteile verhalten sich zu den Gewichtsteilen wie das Liter zum Kilogramm.

Beispiel 1

a) 50 Teile Pigment (hergestellt nach EP-A 35 672, Beispiel 1) werden in einer Planetenkugelmühle (gefüllt mit 20 Achatkugeln Ø1 cm und 20 Achatkugeln mit einem Ø2 cm) 4 Stunden gemahlen.

b) Das stark verdichtete rote Mahlgut, dessen 2 bis 200 µm große Agglomerate aus Primärteilchen von <0,1 µm bestehen, wird in 400 Teile Benzoesäuremethylester eingetragen und 7 h bei 100 °C gerührt. Nach dem Abkühlen auf 70 °C wird filtriert, das Filtergut mit Methanol esterfrei gewaschen und getrocknet.

Ausbeute: 45 Teile einer Pigmentform des Farbstoffs der Formel

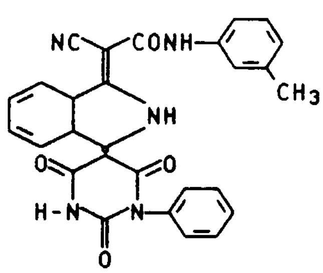

Nach dem Einarbeiten in Lack erhält man Volltonlackierungen, die eine höhere Farbtonreinheit, ein höheres Deckvermögen und höheren Glanz aufweisen als eine Lackierung, die den Farbstoff des Standes der Technik enthält.

Beispiel 2

50 Teile Pigment (hergestellt nach EP-A 62 614, Beispiel 1) werden analog Beispiel 1a) gemahlen bis die Agglomerate aus Primärteilchen <0,1 µm bestehen (Dauer: 4 h). Das stark verdichtete rote Mahlgut wird in 500 Teile Benzoesäuremethylester eingetragen und 6 h bei 60 °C gerührt. Dann wird filtriert, mit Methanol esterfrei gewaschen und getrocknet.

Ausbeute: 45 Teile einer Pigmentform des Farbstoffs der Formel

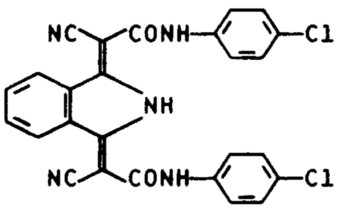

Nach dem Einarbeiten in Lacken erhält man im Vergleich zu dem Pigment des Standes der Technik besonders brillante und wetterechte Färbungen mit hohem Deckvermögen und hohem Glanz.

Beispiel 3

Man verfährt wie in Beispiel 2, verwendet jedoch 50 g Pigment, hergestellt nach EP-A 62 614, Beispiel 8, und erhitzt das auf eine Primärteilchengröße von <0,1 µm gemahlene Rohpigment 5 h unter Rühren auf 150 °C. Nach dem Abkühlen auf 70 °C wird filtriert und mit Methanol esterfrei gewaschen. Ausbeute: 45 Teile einer Pigmentform des Farbstoffes der Formel

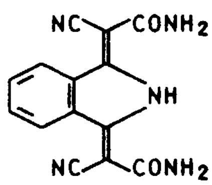

,

die im Lack farbstarke, brillante grünstichig gelbe Lackierungen mit hohem Deckvermögen, hoher Lichtechtheit und hohem Glanz ergibt.

Beispiel 4

Man verfährt wie in Beispiel 1, verwendet jedoch 50 Teile Pigment, hergestellt nach DE-OS 28 14 526, Beispiel 20, und erhitzt das auf eine Primärteilchengröße von <0,1 µm zerkleinerte Rohpigment in 400 Teilen Phthalsäuredimethylester 6 h unter Rühren auf 125 °C. Nach dem Abkühlen auf 70 °C wird filtriert und mit Methanol esterfrei gewaschen.

Ausbeute: 45 Teile einer Pigmentform des Farbstoffes der Formel

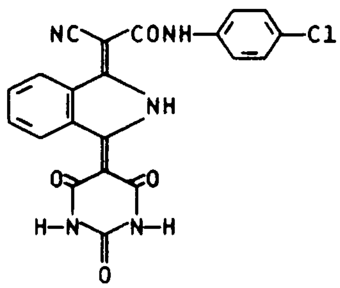

Das Pigment ergibt in Lacken sehr farbstarke und wetterechte Orangefärbungen mit gutem Glanz. Der erfindungsgemäße Farbstoff unterscheidet sich vom Farbstoff des Standes der Technik durch ein anderes Röntgenbeugungsdiagramm. Die Banden des Röntgenbeugungsdiagramms (Strahlung CuKα-) sind in der Tabelle 1 zusammengestellt.

Das Diagramm ist in der Fig. dargestellt.

Tabelle 1

| Beugungswinkel 2$^{\ominus}$ (Strahlung CuKα) | Intensität (bezogen auf die stärkste Bande) |
|---|---|
| 6,5 | 18 |
| 11,2 | 58 |
| 11,6 | 30 |
| 13,1 | 50 |
| 15,1 | 60 |
| 17,2 | 33 |
| 18,1 | 44 |
| 19,6 | 5 |
| 20,4 | 17 |
| 22,5 | 32 |
| 23,2 | 34 |
| 23,7 | 13 |
| 24,4 | 18 |
| 26,0 | 24 |
| 27,4 | 100 |
| 28,3 | 18 |
| 30,2 | 29 |

Beispiel 5

a) 50 Teile Pigment der Formel

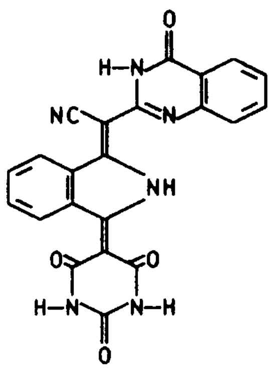

(hergestellt nach dem in Beispiel 1 der DE-OS 33 27 564 beschriebenen Verfahren) werden in einer Planetenkugelmühle gemahlen bis die Primärteilchengröße <0,1 µm ist.
b) Das rote, stark verdichtete Pulver wird in 500 Teilen Benzoesäureethylester 5 h bei 150 ° C gerührt. Nach dem Abkühlen auf 70 ° C wird filtriert und mit Methanol esterfrei gewaschen.
Ausbeute: 45 Teile einer Pigmentform in Form eines gelbstichig roten Pulvers, das in Lacken brillante, farbstarke Färbungen mit sehr hohem Deckvermögen und Glanz gibt.

Beispiel 6

Man verfährt wie in Beispiel 5b), verwendet jedoch anstelle des Benzoesäureethylesters Salicylsäuremethylester. Man isoliert eine Pigmentform, die vergleichbare coloristische Eigenschaften aufweist.

Beispiel 7

Man verfährt wie in Beispiel 5b), verwendet jedoch anstelle des Benzoesäureethylesters 100 Teile Phthalsäuredimethylester und 400 Teile o-Xylol Man erhält 45 Teile einer Pigmentform, die vergleichbare coloristische Eigenschaften aufweist.

Verwendet man o-Xylol allein, dann erhält man eine Pigmentform, die weniger reine Färbungen mit unterlegener Wetterechtheit liefert.

Beispiel 8

Man verfährt wie in Beispiel 5b), verwendet jedoch anstelle des Benzoesäureesters 500 Teile Phthalsäuredimethylester und hält unter Rühren 7 h bei 200 ° C. Man erhält ein gelbstichig rotes Pigment, das in Lacke eingearbeitet ein sehr hohes Deckvermögen, einen sehr hohen Glanz und ausgezeichnete Wetterechtheit aufweist.

Beispiel 9

50 Teile Pigment, hergestellt nach DE-OS 25 04 321, Beispiel 78, werden analog Beispiel 1a) gemahlen bis die Primärteilchengröße <0,1 µm ist. Das stark verdichtete Mahlgut wird in 400 Teile Benzoesäuremethylester eingetragen und 5 h bei 130 ° C gerührt. Nach dem Abkühlen auf 70 ° C wird filtriert, das Filtergut mit Methanol esterfrei gewaschen und getrocknet.

Ausbeute: 45 Teile einer Pigmentform des Farbstoffs der Formel

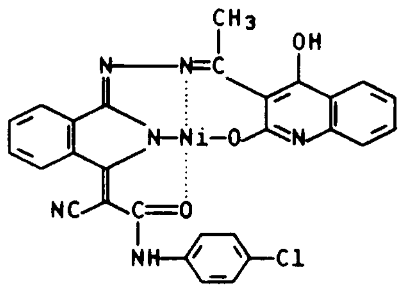

Das Pigment gibt in Lacken sehr farbstarke, reine gelbstichig rote Färbungen mit sehr guten Echtheiten.

Beispiel 10

50 Teile Pigment mit einer Primärteilchengröße von ca. 0,1 µm, das direkt nach DE-OS 32 08 218, Beispiel 1, erhalten wird, werden in 400 Teilen Benzoesäuremethylester 7 h auf 180 ° C erhitzt. Nach dem Abkühlen auf 70 ° C wird filtriert, mit Methanol esterfrei gewaschen und getrocknet. Ausbeute: 45 Teile eines braunen Pigmentes der Formel

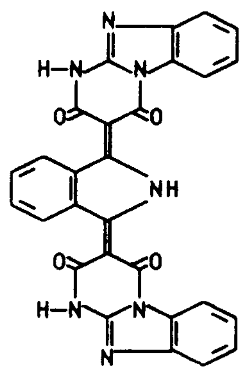

das in Lacken sehr farbstarke, blaustichig braune Färbungen mit hervorragenden Wetterechtheiten liefert.

**Patentansprüche**

**1.** Verfahren zum Überführen von rohen Isoindolinpigmenten der Formeln

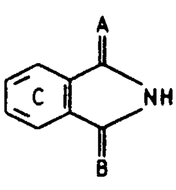

(I),

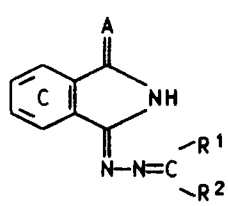

(II),

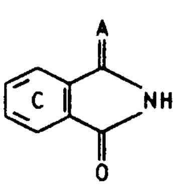

(III),

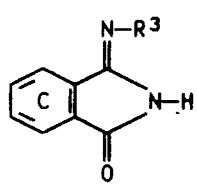

(IV) und

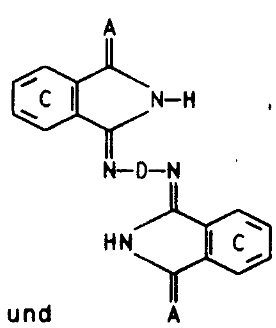

(V)

in denen

A und B unabhängig voneinander für jeweils einen Rest einer methylenaktiven Verbindung,

D für einen gegebenenfalls substituierten Phenylen- oder Naphthylenrest oder eine direkte Bindung,

$R^1$ für Wasserstoff, Hydroxy oder $C_1$- bis $C_4$-Alkyl,

$R^2$ für Phenyl, Naphthyl oder einen 5- oder 6-gliedrigen heteroaromatischen Rest, wobei die für $R^2$ genannten Reste eine zur Salzbildung befähigte orthoständige Hydroxygruppe tragen oder

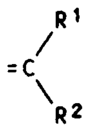

für einen Isoindolonrest,

$R^3$ für Benzimidazolyl-2- oder Benzthiazolyl-2 stehen und wobei die Ringe C gegebenenfalls noch weiter substituiert sind,

oder von Metallkomplexen von (II), (III) und (IV) durch Behandlung mit organischen Flüssigkeiten in der Wärme in deckende Pigmentformen, dadurch gekennzeichnet, daß man Rohpigmente, die Primärteilchengrößen von <0,5 µm aufweisen, in Estern der Benzoesäure und/oder der Benzoldicarbonsäuren auf Temperaturen von Raumtemperatur bis 250 °C erwärmt.

2. Verfahren gemäß Anspruch 1, dadurch gekennzeichnet, daß die Rohpigmente eine Primärteilchengröße von ≦ 0,1 µm aufweisen.

3. Verfahren gemäß Anspruch 2, dadurch gekennzeichnet, daß das Rohpigment durch Mahlen auf die erforderliche Teilchengröße gebracht worden ist.

4. Verfahren gemäß den Ansprüchen 1, 2 oder 3, dadurch gekennzeichnet, daß als Ester $C_1$- bis $C_4$-Alkylester der Benzoesäure, der Benzoldicarbonsäuren, Salicylsäure oder Gemische aus diesen Estern angewendet werden.

5. Verfahren gemäß Anspruch 4, dadurch gekennzeichnet, daß $C_1$- bis $C_4$-Alkylester der Benzoesäure, der Phthalsäure oder Gemische dieser Ester angewendet werden.

6. Verfahren gemäß Anspruch 4, dadurch gekennzeichnet, daß Benzoesäuremethylester angewendet wird.

7. Verfahren gemäß den Ansprüchen 1, 2, 3, 4, 5 oder 6, dadurch gekennzeichnet, daß die Rekristallisation in den Estern bei Temperaturen im Bereich von 40 bis 200 °C erfolgt.

## Claims

1. A process for converting crude isoindoline pigments of the formulae

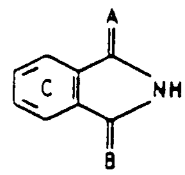 (I), 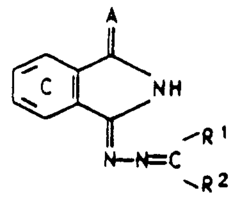 (II), 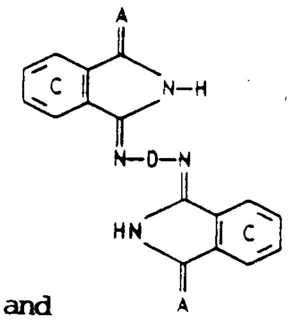

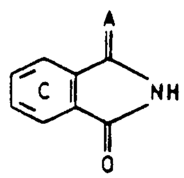 (III), 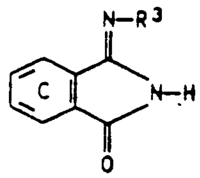 (IV) and

(V)

where
A and B are each independently of the other a radical of an active methylene compound,
D is a substituted or unsubstituted phenylene or naphthylene radical or a direct bond,
$R^1$ is hydrogen, hydroxyl or $C_1$-$C_4$-alkyl,
$R^2$ is phenyl, naphthyl or a 5- or 6-membered heteroaromatic radical with an ortho-disposed hydroxyl group capable of salt formation, or

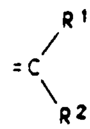

is an isoindolone radical,
$R^3$ is 2-benzimidazolyl or 2-benzothiazolyl, and the rings C may each be further substituted,
or metal complexes of (II), (III) and (IV) into hiding pigmentary forms by treatment with an organic liquid at elevated temperature, which comprises heating the crude pigment, which has a primary particle size of <0.5 $\mu$m, in an ester of benzoic acid or of benzenedicarboxylic acid to a temperature within the range from room temperature to 250 °C.

2. A process as claimed in claim 1, wherein the crude pigment has a primary particle size of ≦0.1 $\mu$m.

3. A process as claimed in claim 2, wherein the crude pigment has been brought to the required particle size by milling.

4. A process as claimed in claim 1, 2 or 3, wherein the ester used is a $C_1$-$C_4$-alkyl ester of benzoic acid, of benzenedicarboxylic acid or of salicylic acid or a mixture of such esters.

5. A process as claimed in claim 4, wherein the ester used is a $C_1$-$C_4$-alkyl ester of benzoic or phthalic acid or a mixture of such esters.

6. A process as claimed in claim 4, wherein methyl benzoate is used.

7. A process as claimed in claim 1, 2, 3, 4, 5 or 6, wherein the recrystallization in the ester takes place at from 40 to 200 °C.

## Revendications

**1.** Procédé pour convertir des pigments d'isoindoline des formules

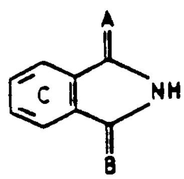 (I),

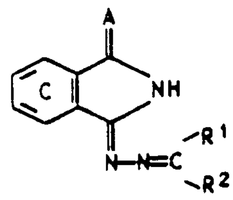 (II),

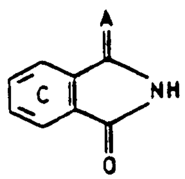 (III),

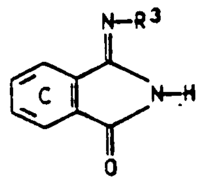 (IV) et

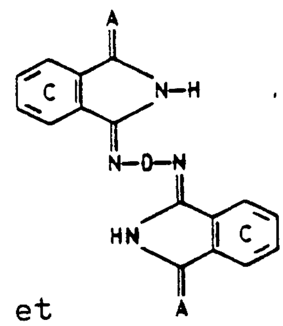

(V)

dans lesquelles

A et B représentent, indépendamment l'un de l'autre, à chaque fois un reste d'un composé à méthylène actif,

D représente une liaison directe ou un radical naphtylène ou phénylène, éventuellement substitué,

$R^1$ représente un atome d'hydrogène, le radical hydroxyle ou un radical alkyle en $C_1$ à $C_4$,

$R^2$ représente un radical phényle, naphtyle ou un radical hétéroaromatique à 5 ou 6 chaînons, où les radicaux cités à propos de $R^2$ portent un radical hydroxyle en position ortho, saligène, ou

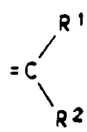

représente un reste d'isoindolone,

$R^3$ représente un radical benzimidazolyle-2 ou benzthiazolyle-2 et où les noyaux C sont éventuellement encore davantage substitués,

ou de complexes de métaux de (II), (III), (IV), par traitement avec des liquides organiques, à chaud, en formes de pigments couvrantes, caractérisé en ce que l'on chauffe des pigments bruts, qui présentent des calibres des particules primaires inférieurs à 0,5 µm, à des températures allant de la température ambiante à 250 ° C, dans des esters de l'acide benzoïque et/ou d'acides benzène-dicarboxyliques.

**2.** Procédé suivant la revendication 1, caractérisé en ce que les pigments bruts présentent des calibres des particules primaires inférieurs ou égaux à 0,1 µm.

**3.** Procédé suivant la revendication 2, caractérisé en ce que le pigment brut a été amené au calibre des particules voulu par broyage.

**4.** Procédé suivant la revendication 1, 2 ou 3, caractérisé en ce que l'on utilise, à titre d'ester, des esters alkyliques en $C_1$ à $C_4$ de l'acide benzoïque, d'acides benzènedicarboxyliques, de l'acide salicylique, ou des mélanges de ces esters.

**5.** Procédé suivant la revendication 4, caractérisé en ce que l'on utilise des esters alkyliques en $C_1$ à $C_4$ de l'acide benzoïque, de l'acide phtalique, ou des mélanges de ces esters.

**6.** Procédé suivant la revendication 4, caractérisé en ce que l'on utilise le benzoate de méthyle.

7. Procédé suivant la revendication 1, 2, 3, 4, 5 ou 6, caractérisé en ce que la recristallisation s'opère à des températures qui varient de 40 à 200 °C dans les esters.

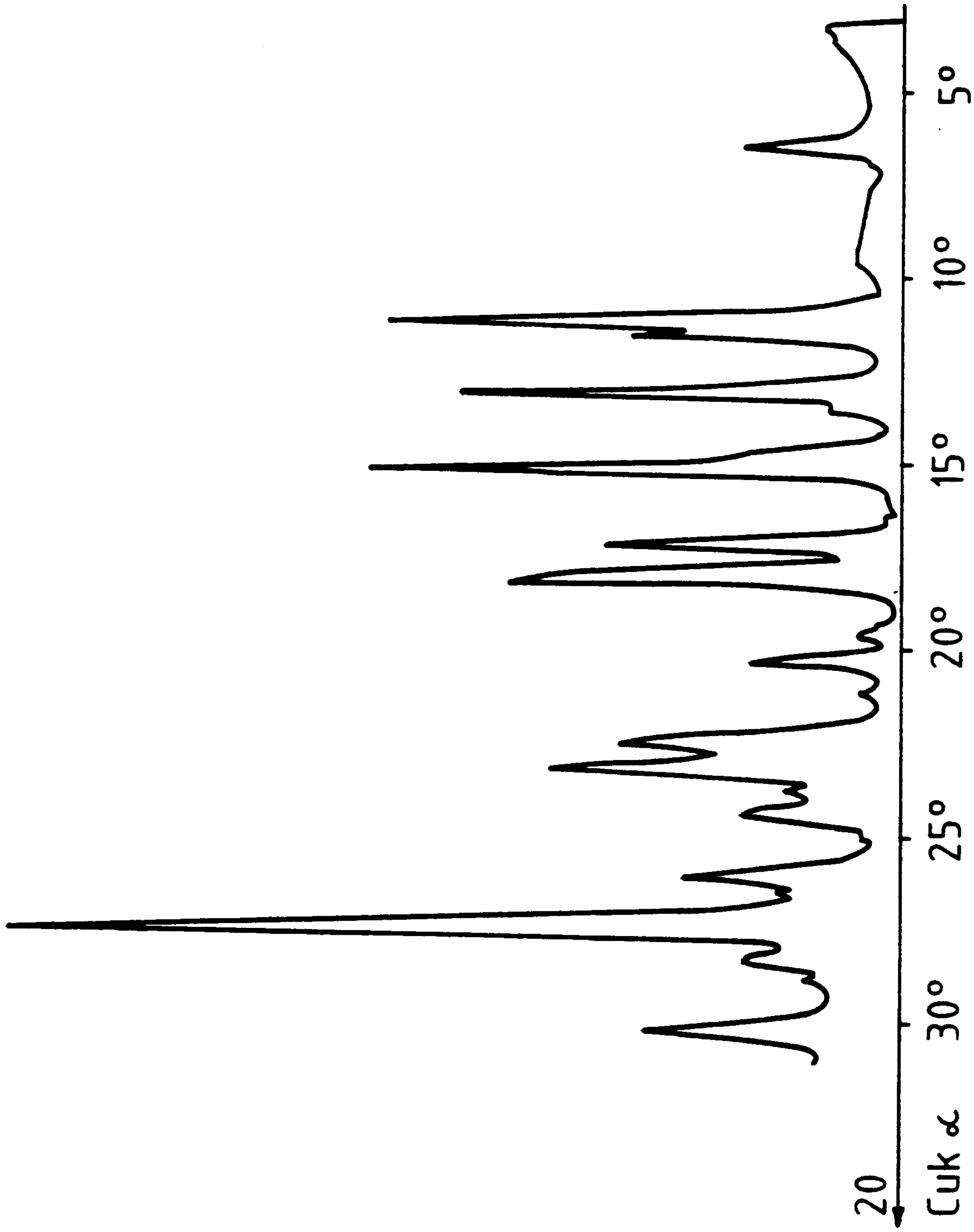
5°
10°
15°
20°
25°
30°
2θ
Cuk α